# FASCICULE DE BREVET EUROPEEN

(11) **EP 1 192 452 B1**
(45) Date de publication et mention de la délivrance du brevet: **27.08.2003**
(21) Numéro de dépôt: 00936588.3
(22) Date de dépôt: 28.06.2000
(51) Int. Cl.: G01N 27/12

(54) **CAPTEUR CHIMIQUE DE GAZ A OXIDE METALLIQUE ET SON PROCEDE DE FABRICATION**
AUS METALLOXID BESTEHENDER CHEMISCHER GASSENSOR UND ZUGEHÖRIGES HERSTELLUNGSVERFAHREN
METAL OXIDE CHEMICAL GAS SENSOR AND METHOD FOR MAKING SAME

(30) Priorité: 02.07.1999 FR 9908749; 14.03.2000 CH 4822000
(43) Date de publication de la demande: 03.04.2002
(73) Titulaire: Microchemical Systems S.A., 2035 Corcelles (CH); CENTRE NATIONAL DE LA RECHERCHE SCIENTIFIQUE (CNRS), 75794 Paris Cedex 16 (FR)
(72) Inventeur: CHAUDRET, Bruno, F-31320 Vigoulet Auzil (FR); ERADES, Laurent, F-31470 Fontenilles (FR); FAU, Pierre, F-09100 La Tour de Crieu (FR); MAISONNAT, André, F-31110 Roquette (FR); NAYRAL, Céline, F-31400 Toulouse (FR); SIMON, Jean-Luc, CH-2000 Neuchâtel (CH)
(74) Mandataire: Gresset, Jean
(86) Numéro de dépôt international: CH0000349
(87) Numéro de publication internationale: WO01002844

(56) Documents cités:
- WO-A-94/10559
- GB-A- 2 321 336
- J ET AL: "Gas sensing and structural properties of variously pretreated nanopowder tin (IV) oxide samples" SENSORS AND ACTUATORS B,CH,ELSEVIER SEQUOIA S.A., LAUSANNE, vol. 53, no. 1-2, 26 novembre 1998 (1998-11-26), pages 76-90, XP004151877 ISSN: 0925-4005
- MAJOO S ET AL: "A SILICON MICROMACHINED CONDUCTOMETRIC GAS SENSOR WITH A MASKLESS PT SENSING FILM DEPOSITED BY SELECTED-AREA CVD" SENSORS AND ACTUATORS B,CH,ELSEVIER SEQUOIA S.A., LAUSANNE, vol. B36, no. 1/02/03, 1 octobre 1996 (1996-10-01), pages 312-319, XP000681229 ISSN: 0925-4005
- PARK H S ET AL: "TIN OXIDE MICRO GAS SENSOR FOR DETECTING CH3SH" SENSORS AND ACTUATORS B,CH,ELSEVIER SEQUOIA S.A., LAUSANNE, vol. B25, no. 1/03, PART 02, 1 avril 1995 (1995-04-01), pages 478-481, XP000532843 ISSN: 0925-4005

## Description

La présente invention se rapporte aux capteurs chimiques de gaz. Elle concerne, plus particulièrement, un capteur chimique à oxyde métallique et son procédé de fabrication.

Un tel capteur comporte un substrat, un corps de chauffe disposé sur le substrat, un élément sensible d'oxyde métallique, généralement de l'oxyde d'étain (SnO₂), placé sur le corps de chauffe, avec interposition d'une couche électriquement isolante, ainsi que deux pistes conductrices pour permettre l'application d'un courant électrique à l'élément sensible. Un tel capteur est connu du document GB-A-2 321 336.

Le principe de ce capteur chimique repose sur la capacité de l'oxyde métallique, porté à haute température (environ 400°C) par le corps de chauffe, à adsorber le gaz ambiant qui modifie ainsi sa résistivité. La variation de résistance de cette couche sensible à une température donnée est alors représentative de la quantité de gaz à détecter. La sensibilité du capteur est définie comme le rapport de la résistance de la couche sensible sous air à sa résistance en présence du gaz.

De tels capteurs sont principalement destinés à constituer l'élément sensible des systèmes de sécurité de plus en plus utilisés pour la détection dans l'air ambiant de gaz nocifs tels que le monoxyde de carbone, l'oxyde d'azote, les hydrocarbures,..., tant dans le domaine domestique que le domaine industriel.

Ces capteurs se distinguent généralement les uns des autres par la façon dont est produit l'élément sensible d'oxyde métallique mais, dans tous les cas, le paramètre prépondérant pour obtenir des propriétés optimales de sensibilité au gaz est la taille des grains de l'oxyde métallique, qui doit être la plus faible possible.

Une méthode courante utilise le dépôt en phase vapeur (par technique PVD, CVD,...) sur un substrat, généralement en silicium, en appliquant la technologie des circuits intégrés et du micro-usinage. On trouvera un exemple d'une telle réalisation dans l'article de Wan-Young et Al. "Characterization of porous tin oxide thin films an their application to microsensor fabrication" paru dans Sensors and Actuators B 24-25 (1995) 482-485. En procédant ainsi, les particules obtenues sont de dimension micrométrique mais seules les cristallites élémentaires constituant ces particules sont nanométriques (environ 30nm).

Une technologie plus récente est décrite dans les demandes de brevet EP 97401796.4 et 98400246.9, la deuxième intégrant la description de la première dans la sienne. Le capteur comporte un substrat semi-conducteur en silicium sur lequel sont déposées successivement, puis usinées par photo-lithographie, une couche diélectrique, une couche conductrice formant le corps de chauffe, une couche d'isolation électrique, une couche d'oxyde métallique formant l'élément sensible du capteur, une couche de métal conducteur pour constituer les pistes d'alimentation du corps de chauffe et de l'élément sensible et, enfin, une couche de passivation protégeant les pistes conductrices et comportant une ouverture qui découvre la couche sensible sous-jacente et délimite la surface de mesure.

Selon l'enseignement de la demande EP 98400246.9, la couche d'oxyde métallique se présente sous la forme d'une poudre agglomérée à structure poreuse constituée de grains de SnO₂, dits colloïdaux, de forme sphérique bien contrôlée et ayant un diamètre moyen de 20 nanomètres seulement.

L'inconvénient de ce procédé est que les différentes opérations de photolithographie constituent des agressions de l'élément sensible (pollution, nettoyages,..) qui modifient ses caractéristiques et, par là, diminuent sa sensibilité.

Par ailleurs, la composition du matériau utilisé pour former l'élément sensible doit être adaptée, par dopage notamment à l'aide de platine, palladium, manganèse,..., au gaz à détecter. Il est ainsi nécessaire de prévoir, au cours du processus de fabrication, des opérations spécifiques pour chaque type de capteurs.

Le but essentiel de la présente invention est de réaliser un capteur de grande sensibilité et dont le processus de fabrication est grandement simplifié.

De façon plus précise, l'invention concerne un capteur chimique de gaz à oxyde métallique, du type comportant:
- un substrat,
- un corps de chauffe disposé sur le substrat,
- une couche électriquement isolante disposée sur le corps de chauffe,
- un élément sensible d'oxyde métallique disposé sur la couche isolante, et
- deux pistes conductrices pour permettre l'application d'un signal électrique à l'élément sensible.

Ce capteur est caractérisé en ce que les pistes conductrices reposent sur la couche isolante et en ce que l'élément sensible comporte une couche supérieure d'oxyde de métal sous la forme d'une poudre agglomérée à structure poreuse constituée de particules ayant un diamètre de l'ordre de 20 nanomètres et recouvrant au moins partiellement les extrémités des pistes.

On voit ainsi, comme cela ressortira mieux plus tard, que la couche sensible supérieure est le tout demier élément de la structure formant le capteur. Cela permet de ne la déposer qu'au tout dernier moment, c'est-à-dire lorsque toutes les opérations de photolithographie, de découpe puis d'assemblage ont été effectuées. La contamination et la détérioration de la couche sensible sont donc évitées. De plus, il est possible de réaliser des capteurs de différents types sur une même ligne de production, les opérations spécifiques d'adaptation au gaz à détecter pouvant quasiment être réalisées sur place.

Selon un mode de réalisation particulièrement avantageux, l'élément sensible comporte, en plus, intercalée entre la couche isolante et la couche supérieure d'oxyde, une couche inférieure d'oxyde du même métal formée de grains ayant une dimension moyenne comprise entre 100 nanomètres et 1 micromètre, les extrémités des pistes étant intercalées entre la couche inférieure et la couche supérieure.

Le capteur selon l'invention comporte encore, avantageusement, les caractéristiques suivantes:
- le métal de l'oxyde formant les deux couches sensibles est l'étain;
- le substrat est en silicium monocristallin;
- il comporte une couche diélectrique interposée entre le substrat et le corps de chauffe;
- le corps de chauffe est en silicium polycristallin rendu conducteur par dopage;
- la couche électriquement isolante est en oxyde de silicium (SiO₂) ou nitrure de silicium (Si₃N₄);
- il comporte, sur la couche isolante et les pistes conductrices, une couche de passivation munie d'une ouverture centrale destinée à recevoir ensuite la couche supérieure d'oxyde;
- cette couche de passivation est constituée d'une double couche d'oyxde de silicium (SiO₂) et de nitrure de silicium (Si₃N₄);
- l'épaisseur de la couche supérieure d'oxyde est de l'ordre de 1 micromètre;
- l'épaisseur de la couche inférieure d'oxyde est comprise entre 50 et 300 nanomètres;
- il comporte une embase sur laquelle le substrat est fixé et un boîtier de protection réalisé en un matériau faisant office de filtre.

L'invention conceme également un procédé de fabrication d'un capteur tel que défini ci-dessus. Il est caractérisé en ce qu'il comporte les étapes successives suivantes:
- formation, sur une partie d'un substrat, d'une couche conductrice destinée à former un corps de chauffe,
- formation d'une couche électriquement isolante sur la couche conductrice et la partie du substrat non recouverte par celle-ci,
- formation de pistes conductrices sur la couche isolante, puis
- formation d'un élément sensible d'oxyde de métal, cette étape comportant la constitution, sur une partie de la couche isolante et les extrémités des pistes, d'une couche supérieure d'oxyde sous la forme d'une poudre agglomérée à structure poreuse constituée de particules ayant un diamètre de l'ordre de 20 nanomètres, la constitution de cette couche comportant les opérations de dépôt d'une goutte d'une solution colloïdale du métal, puis de chauffage de l'ensemble pour oxyder et rendre solidaires les particules formant le colloïde de la solution.

De façon avantageuse, afin d'améliorer les performances du capteur, notamment sa stabilité, l'étape de formation de l'élément sensible comporte, préalablement à l'étape de formation des pistes conductrices, les opérations de dépôt, par pulvérisation cathodique, d'une couche inférieure du même métal, puis son oxydation.

Le procédé selon l'invention comporte encore, avantageusement, les caractéristiques suivantes:
- l'opération de chauffage est effectuée à l'aide du corps de chauffe;
- il comporte, préalablement à l'étape de formation de la couche conductrice, l'étape de formation, sur le substrat, d'une couche diélectrique;
- il comporte, préalablement à l'étape de constitution de la couche supérieure d'oxyde, l'étape de formation, sur la couche isolante et les pistes conductrices, d'une couche de passivation munie d'une ouverture centrale destinée à recevoir ensuite la couche supérieure d'oxyde;
- il comporte, postérieurement à l'étape de formation de la couche de passivation et préalablement à l'étape de constitution de la couche supérieure d'oxyde, l'étape de fixation du substrat sur une embase et l'étape de connexion des pistes conductrices aux bornes de l'embase.

D'autres avantages et caractéristiques de l'invention ressortiront de la description qui va suivre, faite en regard du dessin annexé, dans lequel:
- les figures 1 et 2 montrent un capteur selon l'invention, respectivement vu de dessus et en coupe selon la ligne brisée I - II de la figure 1;
- les figures 3 à 10 illustrent les différentes étapes de fabrication d'une puce, vue en coupe, destinée à équiper le capteur des figures 1 et 2;
- la figure 11 est une vue écorchée de dessus de la puce;
- la figure 12 illustre l'étape de réalisation de la couche sensible;
- la figure 13 représente une variante de réalisation dans laquelle le capteur permet de mesurer plusieurs types de gaz; enfin,
- les figures 14 et 15 montrent une autre forme de réalisation du capteur des figures 1 et 2.

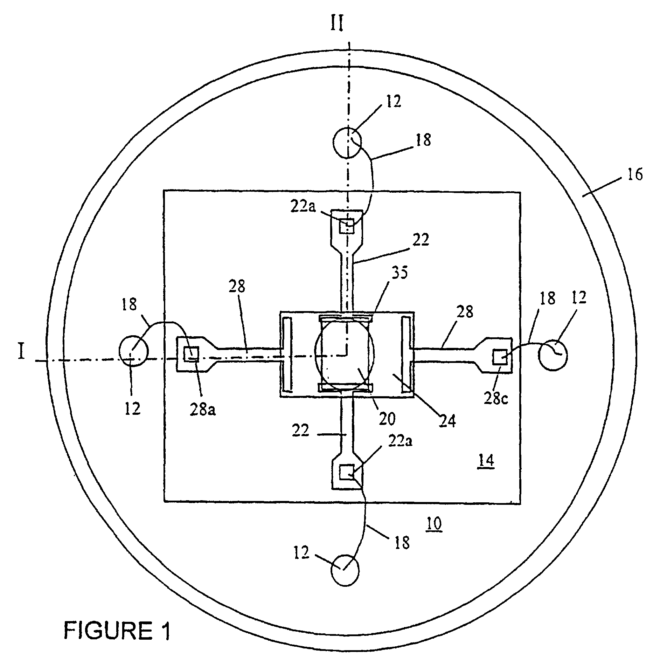

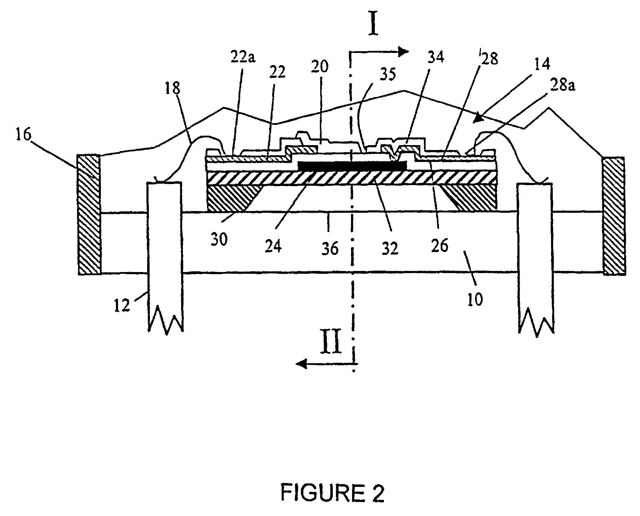

Le capteur représenté aux figures 1 et 2 est formé d'une embase 10, de poteaux 12 traversant l'embase et destinés à former les bornes électriques du capteur, et d'une puce 14 fixée sur l'embase 10 et recouverte d'un boîtier de protection 16. La puce est reliée aux poteaux 12 par des fils conducteurs 18 soudés à chacune de leurs extrémités.

La puce 14 comprend, sur sa face supérieure, une couche sensible 20 d'oxyde métallique, par exemple du dioxyde d'étain (SnO₂), ayant une épaisseur de l'ordre de 1 micromètre. Cette couche se présente sous la forme d'une poudre agglomérée à structure poreuse constituée de particules sphériques possédant un diamètre de l'ordre de 20 nanomètres. La couche 20 est en contact, par une partie de sa périphérie, avec deux pistes conductrices 22 destinées à injecter le courant électrique de mesure. Leurs extrémités opposées à la zone de contact avec la couche 20 comportent chacune une plage 22a sur laquelle est soudé le fil 18 assurant la liaison avec un poteau 12.

Un corps de chauffe 24, séparé de la couche sensible 20 par une couche isolante 26, permet de chauffer le capteur à la température désirée. Il est alimenté électriquement par des pistes conductrices 28 en contact avec ses extrémités. Les pistes 28 comportent chacune, à leur extrémité opposée au corps de chauffe 24, une plage 28a sur laquelle est soudé un fil 18 assurant la liaison avec un poteau 12.

Le tout est disposé sur un substrat 30 revêtu d'une membrane 32. En outre, une couche de passivation 34 est disposée sur la face supérieure pour recouvrir la puce 14 à l'exception des plages 22a et 28a et d'une découpe 35 essentiellement occupée par la couche sensible 20. Afin de réduire l'inertie thermique de l'ensemble, le substrat 30 est creusé sous le corps de chauffe, jusqu'à la membrane 32, pour former un dégagement 36.

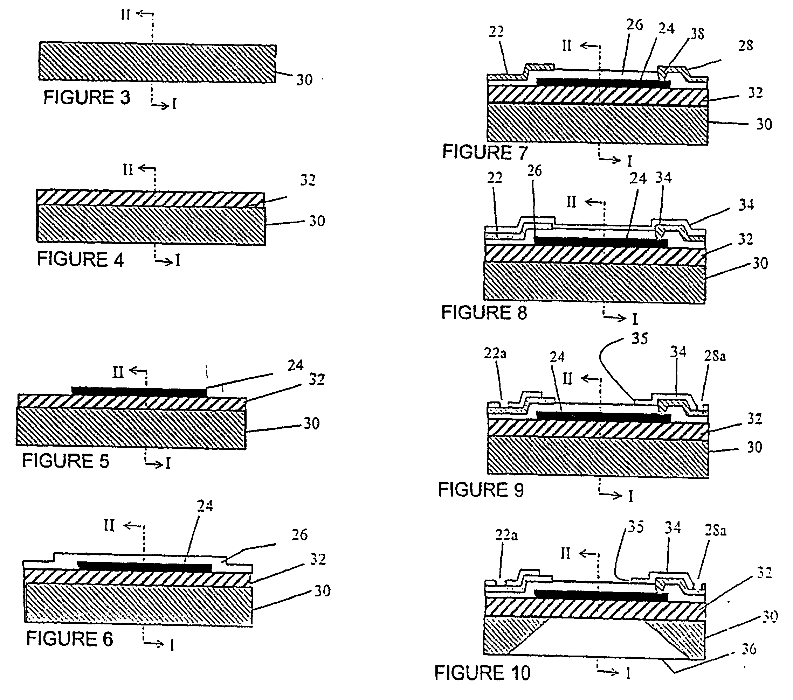

On se référera maintenant aux figures 3 à 11 montrant les différentes étapes du procédé de fabrication de la puce, qui fait appel aux techniques habituelles de photo-lithographie utilisées dans la production de circuits intégrés et de micro-usinages. Les matériaux mentionnés ci-dessous sont donnés à titre d'exemple uniquement, d'autres pouvant être préférés, sans pour autant sortir du cadre de l'invention.

On part d'un substrat 30 constitué d'une plaque de silicium monocristallin telle qu'utilisée pour la fabrication de circuits intégrés, par exemple de type P, référencé <100> (figure 3). Plusieurs puces peuvent y être formées simultanément. Toutefois, pour simplifier le dessin, une seule est représentée.

La face supérieure du substrat 30 est, tout d'abord, revêtue d'une couche diélectrique en oxynitrure, destinée à former la membrane 32 (figure 4), puis d'une couche conductrice en silicium polycristallin rendue conductrice par dopage au moyen de phosphore. Cette couche est ensuite usinée par photo-lithographie pour former un rectangle disposé au centre de la puce et qui constitue le corps de chauffe 24 (figure 5). Puis, une couche d'oxyde de silicium (SiO₂) ou de nitrure de silicium (Si₃N₄) vient recouvrir le tout et forme la couche d'isolation 26 (figure 6).

Après avoir réalisé, dans la couche 26, des découpes définissant des fenêtres 38 ouvertes jusqu'au corps de chauffe 24 sur deux côtés opposés du rectangle, on revêt le tout d'une couche conductrice métallique, en alliage de chrome/titane/platine. Cette couche est ensuite usinée par photo-lithographie, afin de définir les pistes conductrices 22 et 28 destinées à alimenter respectivement la couche sensible 20 et le corps de chauffe 24 (figure 7). Plus précisément, le métal formant les pistes 22 pénètre dans les fenêtres 38 pour assurer le contact avec le corps de chauffe 24.

L'ensemble est ensuite revêtu de la couche de passivation 34 qui assure une protection des couches sous-jacentes (figure 8) et est gravée pour dégager les plages 22a et 28a destinées à permettre de connecter les pistes conductrices aux poteaux 12 ainsi que la découpe 35, de forme rectangulaire, destinée à recevoir la couche sensible du capteur (figure 9), et disposée dans la partie centrale du rectangle que définit le corps de chauffe 24. Cette découpe sert à dégager les contacts de la piste conductrice sous la couche sensible.

Le substrat 30 est finalement attaqué chimiquement sur sa face inférieure afin de réaliser le dégagement 36. De la sorte, il ne subsiste que la membrane 32 sous le corps de chauffe 24 (figure 10).

Le substrat est ensuite découpé en puces qui sont montées chacune sur une embase 10, comme illustré aux figures 1 et 2.

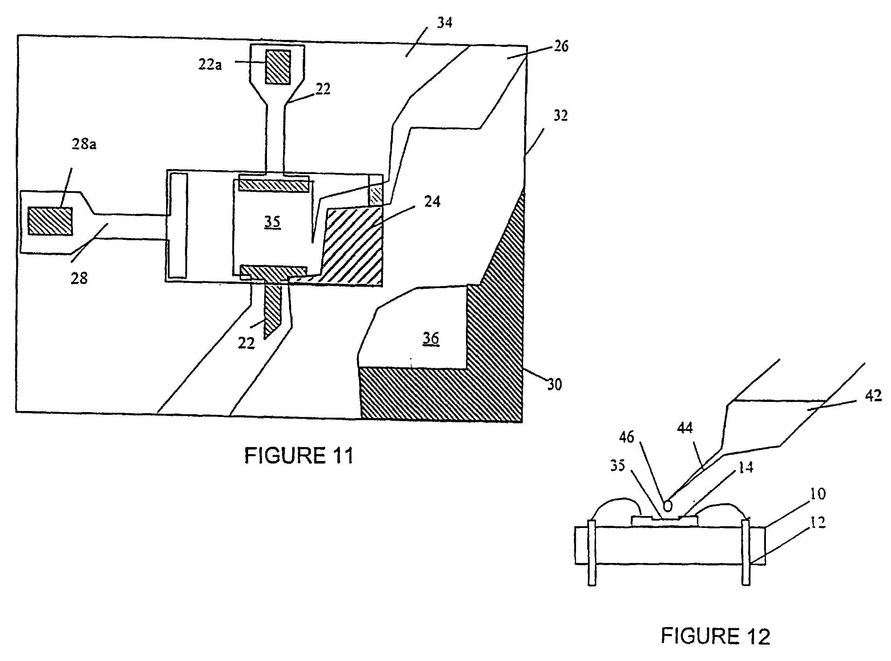

On notera qu'à ce stade du procédé, le couche sensible 20 n'a toujours pas été déposée. Toutes les opérations décrites jusqu'ici se retrouvent donc à l'identique quel que soit le type de capteur réalisé. La fonction du capteur ne sera définie qu'après la mise en place de la couche sensible 20, selon la technique décrite en détail dans le document EP 98400246.9 (déjà cité) et comme illustré par la figure 12.

Cette figure montre l'embase 10 et la puce 14, ainsi qu'un micro-doseur 42, muni d'un capillaire 44 et contenant une solution colloïdale formée d'un solvant et de nano-particules de métal en suspension, généralement de l'étain. De manière avantageuse, la solution colloïdale est obtenue à partir d'un précurseur organométallique, par exemple un complexe amide de type ([(Sn(NCH₃)₂)₂]₂) mélangé à un solvant légèrement hydraté, tel que le toluène ou l'anisole. La concentration est choisie de façon que la solution puisse s'écouler normalement au travers du capillaire.

Le micro-doseur 42 est commandé par une source de gaz non oxydant, avantageusement de l'azote. Une augmentation de la pression provoque un écoulement de la solution au travers du capillaire 44. Il se forme alors une goutte 46 qui est disposée au centre de la découpe 35. Son volume est tel qu'elle s'étend jusqu'au-dessus des pistes conductrices 22. La goutte 46 est positionnée et centrée dans la découpe 35.

Le colloïde est généralement formé d'étain dopé au platine, palladium, manganèse ou tout autre dopant choisi en fonction du gaz à analyser.

La couche sensible 20 se trouvant sur son site de réception, il ne reste plus qu'à la porter, à l'aide du corps de chauffe 24 (alimenté par l'intermédiaire des poteaux 12), à une température élevée, typiquement de 500°C environ. Ce traitement thermique in situ a pour but de faire évaporer le solvant et de provoquer l'agglomération des particules ainsi que leur oxydation, de manière à conférer à la couche sensible les propriétés physico-chimiques souhaitées, lesquelles peuvent être ajustées en fonction d'un gaz particulier à détecter en jouant sur des paramètres tels que la température, la durée et le cyclage thermique.

La couche 20 ainsi obtenue a une structure poreuse constituée de sphères qui sont attachées les unes aux autres et adhérent à la couche isolante 26 et aux pistes conductrices 22.

Une fois que la couche sensible est en place, il ne reste plus qu'à la protéger des corps étrangers, de l'air ambiant ainsi que de certains composés gazeux que l'on ne désire pas détecter. A cet effet, on fixe sur l'embase 10 le boîtier 16 (représenté partiellement sur la figure 2) qui est en matière plastique ou en métal et comporte, de manière classique, une grille et un matériau filtrant (charbon actif, zéolithe,...). destinés à éviter l'introduction de poussières et de gaz ambiants non pertinents pour la mesure (vapeurs d'éthanol, d'eau,...). En variante, ce boîtier peut être avantageusement réalisé en un matériau méso-poreux, tel que l'oxyde de silicium (SiO₂) ou le nitrure de silicium (Si₃N₄). Dans ce cas, il n'est plus nécessaire de doter le boîtier d'une grille et d'un matériau filtrant puisqu'il fait lui-même office de filtre.

Dans les systèmes de sécurité, de nombreuses situations requièrent l'analyse simultanée de plusieurs gaz. Avec les techniques connues, il est nécessaire de disposer de plusieurs capteurs indépendants, fabriqués séparément, car les couches sensibles doivent présenter des caractéristiques différentes, obtenues au cours du processus de fabrication.

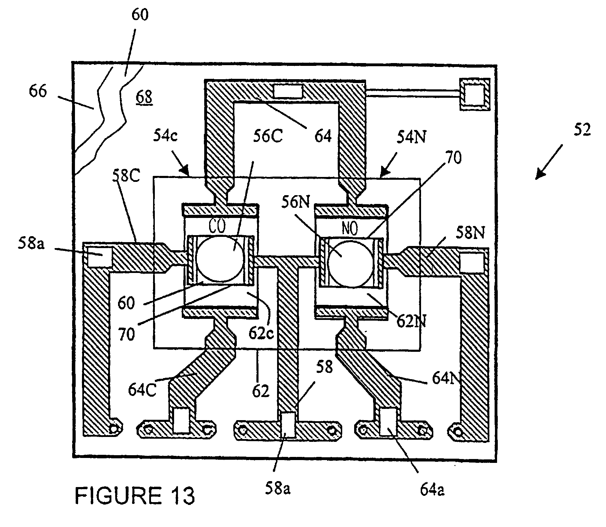

Grâce au procédé selon l'invention, la réalisation de plusieurs capteurs sur une même puce est particulièrement aisée et de faible coût. La figure 13 montre une telle puce, qui porte la référence 52. Elle comprend deux capteurs 54C et 54N, agencés pour analyser respectivement la présence de monoxyde de carbone (CO) et de monoxyde d'azote (NO). Sur cette figure, les parties spécifiques à l'un des capteurs sont identifiées par les lettres C ou N qui suivent le numéro de référence. Aucune lettre n'est ajoutée lorsque le composant est commun aux deux capteurs.

Chacun des capteurs présente la même structure que celle décrite en référence aux figures 1 et 2, avec une couche sensible 56, des pistes conductrices 58 destinées à mesurer la résistance de la couche conductrice, une couche isolante 60, un corps de chauffe 62 alimenté par deux pistes conductrices 64, une membrane 66 commune aux deux capteurs et un substrat disposé sous la membrane 66 et qui n'est pas représenté.

Le tout est recouvert d'une couche de passivation 68 dans laquelle des ouvertures 58a et 64a ont été pratiquées au droit des pistes conductrices, pour définir des plages sur lesquelles des fils peuvent être soudés, et une découpe 70 dans laquelle se dessinent les extrémités intérieures des pistes conductrices 58 et la couche isolante 60, et où est disposée la couche sensible 56. Cette dernière recouvre, au moins partiellement, les pistes conductrices 58, de sorte qu'elles sont reliées l'une à l'autre électriquement, ce qui permet de déterminer la résistance électrique de la couche sensible 56 par la mesure du courant la traversant.

Comme la température de traitement de la solution colloïdale pour la transformer en couche sensible est définie par le corps de chauffe et non par l'environnement, chaque capteur peut être traité de manière spécifique, ce qui n'est pas possible lorsque le traitement thermique se fait en disposant le capteur dans une enceinte chauffée. On peut donc, de la sorte, réaliser sur un même substrat deux capteurs ayant des caractéristiques différentes sans devoir prendre de mesures particulières.

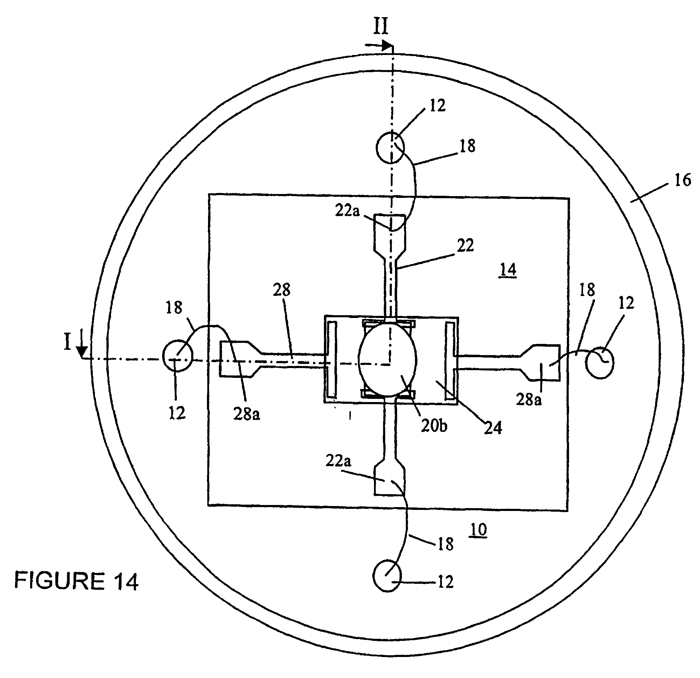

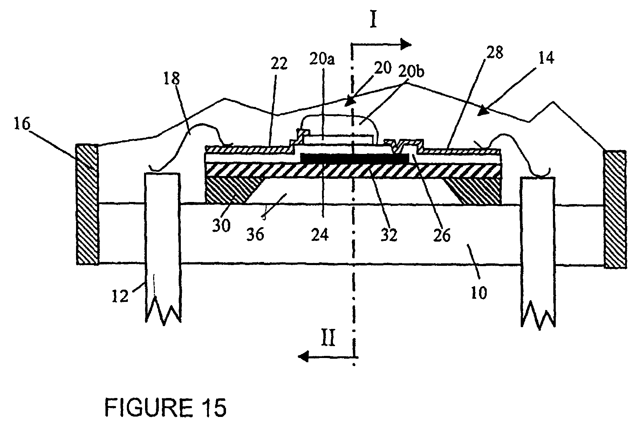

On se référera, pour terminer, aux figures 14 et 15 qui représentent une variante de réalisation du capteur des figures 1 et 2, les éléments communs aux deux exécutions étant désignés par les mêmes numéros de référence.

Dans ce cas, l'élément sensible 20 est, en fait, constitué d'une couche inférieure de SnO₂20a déposée sur la couche isolante 26 et formée de grains ayant une dimension moyenne sensiblement comprise entre 100 nanomètres et 1 micromètre, et d'une couche supérieure de SnO₂ 20b déposée sur la première et, comme la couche 20 des figures 1 et 2, se présentant sous la forme d'une poudre agglomérée à structure poreuse constituée de particules sphériques ayant un diamètre de l'ordre de 20 nanomètres.

On notera que les pistes conductrices 22 ont leurs extrémités intercalées entre les bords des deux couches 20a et 20b de l'élément sensible. Cela veut dire que la couche inférieure 20a est réalisée avant la formation des pistes conductrices.

Plus précisément, la couche inférieure de SnO₂ 20a est déposée par pulvérisation cathodique d'étain (Sn) puis oxydation selon les procédés habituels de la microélectronique. Son épaisseur est, typiquement, comprise entre 50 et 300 nanomètres. Afin d'assurer une meilleure adhérence de cette couche et d'en éliminer toutes les impuretés, il est particulièrement avantageux que le processus d'oxydation, réalisé dans une atmosphère d'oxygène et d'azote, débute dans une atmosphère d'azote et d'hydrogène.

La couche supérieure 20b est mise en place, en tout dernier lieu, sur les extrémités des pistes 22 et la couche inférieure 20a, selon le procédé décrit précédemment.

## Revendications

1. Capteur chimique de gaz à oxyde métallique comportant:
- un substrat (30),
- un corps de chauffe (24) disposé sur ledit substrat,
- une couche électriquement isolante (26) disposée sur ledit corps de chauffe,
- un élément sensible d'oxyde métallique (20) disposé sur ladite couche isolante, et
- deux pistes conductrices (22) pour permettre l'application d'un signal électrique audit élément sensible,
**caractérisé en ce que** les pistes conductrices (22) reposent sur ladite couche isolante (26) et **en ce que** ledit élément sensible (20) comporte une couche supérieure d'oxyde de métal (20b) sous la forme d'une poudre agglomérée à structure poreuse constituée de particules sphériques ayant un diamètre de l'ordre de 20 nanomètres et recouvrant au moins partiellement les extrémités desdites pistes.

2. Capteur selon la revendication 1, **caractérisé en ce que** ledit élément sensible (20) comporte, en plus, intercalée entre la couche isolante (26) et la couche supérieure d'oxyde (20b), une couche inférieure d'oxyde du meme métal (20a) formée de grains ayant une dimension moyenne supérieure à 100 nanomètres, les extrémités desdites pistes étant intercalées entre la couche inférieure et la couche supérieure.

3. Capteur selon la revendication 2, **caractérisé en ce que** la dimension moyenne des grains formant la couche inférieure (20a) ne dépasse pas 1 micromètre.

4. Capteur selon la revendication 1, **caractérisé en ce que** le métal de l'oxyde formant l'élément sensible est l'étain.

5. Capteur selon la revendication 1, **caractérisé en ce que** ledit substrat (30) est en silicium monocristallin.

6. Capteur selon la revendication 1, **caractérisé en ce qu'**il comporte, en outre, une couche diélectrique (32) interposée entre ledit substrat (30) et ledit corps de chauffe (24).

7. Capteur selon la revendication 1, **caractérisé en ce que** ledit corps de chauffe (24) est en silicium polycristallin rendu conducteur par dopage.

8. Capteur selon la revendication 1, **caractérisé en ce que** ladite couche électriquement isolante (26) est en oxyde de silicium (SiO2) ou nitrure de silicium (Si3N4).

9. Capteur selon la revendication 1, **caractérisé en ce qu'**il comporte, en outre, sur ladite couche isolante (26) et lesdites pistes conductrices (22), une couche de passivation (34) munie d'une ouverture centrale (35) destinée à recevoir ensuite la couche supérieure d'oxyde (20b).

10. Capteur selon la revendication 9, **caractérisé en ce que** ladite couche de passivation (34) est constituée d'une double couche d'oyxde de silicium (SiO2) et de nitrure de silicium (Si3N4).

11. Capteur selon la revendication 1, **caractérisé en ce que** l'épaisseur de la couche supérieure d'oxyde est de l'ordre de 1 micromètre.

12. Capteur selon la revendication 2, **caractérisé en ce que** l'épaisseur de la couche inférieure d'oxyde est comprise entre 50 et 300 nanomètres.

13. Capteur selon la revendication 1, **caractérisé en ce qu'**il comporte, en outre, une embase (10) sur laquelle ledit substrat (30) est fixé.

14. Capteur selon la revendication 1, **caractérisé en ce qu'**il comporte un boîtier de protection (16) réalisé en un matériau faisant office de filtre.

15. Procédé de fabrication d'un capteur chimique de gaz à oxyde métallique, **caractérisé en ce qu'**il comporte les étapes successives suivantes:
- formation, sur une partie d'un substrat (30), d'une couche conductrice destinée à former un corps de chauffe (24),
- formation d'une couche électriquement isolante (26) sur ladite couche conductrice et la partie du substrat non recouverte par celle-ci,
- formation de pistes conductrices (22) sur ladite couche isolante (26), puis
- formation d'un élément sensible d'oxyde de métal (20), **caracterisée en ce que** cette étape comporte la constitution, sur une partie de la couche isolante (26) et les extrémités desdites pistes (22), d'une couche supérieure d'oxyde (20b) sous la forme d'une poudre agglomérée à structure poreuse constituée de particules sphériques ayant un diamètre de l'ordre de 20 nanomètres, la constitution de cette couche supérieure (20) comprenant les opérations de dépôt d'une goutte d'une solution colloïdale dudit métal, puis de chauffage de l'ensemble pour oxyder et rendre solidaires les particules formant le colloïde de ladite solution.

16. Procédé selon la revendication 15, **caractérisé en ce que** l'étape de formation de l'élément sensible d'oxyde de métal (20) comporte, en outre, préalablement à l'étape de formation des pistes conductrices, les opérations de dépôt par pulvérisation cathodique, sur une partie de la couche isolante (26), d'une couche inférieure (20a) dudit métal, puis son oxydation.

17. Procédé selon l'une des revendications 15 et 16, **caractérisé en ce que** ledit métal est l'étain.

18. Procédé selon la revendication 15, **caractérisé en ce que** ladite opération de chauffage est effectuée à l'aide du corps de chauffe (24).

19. Procédé selon la revendication 15, **caractérisé en ce qu'**il comporte, en outre, préalablement à l'étape de formation de ladite couche conductrice, l'étape de formation, sur le substrat (30), d'une couche diélectrique (32).

20. Procédé selon la revendication 15, **caractérisé en ce qu'**il comporte, en outre, préalablement à l'étape de constitution de la couche supérieure d'oxyde (20b), l'étape de formation, sur ladite couche isolante (26) et lesdites pistes conductrices (22), d'une couche de passivation (34) munie d'une ouverture centrale (35) destinée à recevoir ensuite ladite couche supérieure d'oxyde.

21. Procédé selon la revendication 20, **caractérisé en ce qu'**il comporte, en outre, postérieurement à l'étape de formation de ladite couche de passivation (34) et préalablement à l'étape de constitution de la couche supérieure d'oxyde (20b), l'étape de fixation dudit substrat sur une embase (10) et l'étape de connexion des pistes conductrices (22) aux bornes (12) de l'embase.

## Patentansprüche

1. Chemischer Metalloxid-Gassensor bestehend aus:
- einem Substrat (30),
- eines Heizkörpers (24) aufgebracht auf das genannte Substrat,
- einer elektrischen Isolationsschicht (26) aufgebracht auf den genannten Heizkörper,
- einem Sensorelement aus Metalloxid (20) aufgebracht auf die genannte lsolationsschicht und
- zwei Leiterbahnen (22) um ein elektrisches Signal an das genannte Sensorelement zu bringen,
**dadurch gekennzeichnet, dass** die genannten Leiterbahnen (22) auf der genannten Isolationsschicht (26) liegen und dass das genannte Sensorelement aus Metalloxid (20) eine darüberliegende Metalloxidschicht (20b) beinhaltet, in Form eines agglomerierten Pulvers mit poröser Struktur und sphärischen Partikeln mit einem Durchmesser in der Größenordnung von 20 Nanometer, welche mindestens Teilweise die Enden der genannten Leiterbahnen bedeckt.

2. Gassensor nach Anspruch 1, **dadurch gekennzeichnet, dass** das genannte Sensorelement (20) zusätzlich eine untere Metalloxidschicht (20a) des gleichen Metalls aufweist, welche zwischen der genannten lsolationsschicht (26) und der oberen Metalloxidschicht (20b) liegt und welche Körner mit einer durchschnittlichen Größe von über 100 Nanometer aufweist, wobei die Enden der genannten Leiterbahnen zwischen der oberen Metalloxidschicht und der unteren Metalloxidschicht liegen.

3. Gassensor nach Anspruch 2, **dadurch gekennzeichnet, dass** das die Körner der genannten unteren Metalloxidschicht (20a) nicht größer als 1 Mikrometer sind.

4. Gassensor nach Anspruch 1, **dadurch gekennzeichnet, dass** das Metalloxid des Sensorelements aus Zinn besteht.

5. Gassensor nach Anspruch 1, **dadurch gekennzeichnet, dass** das genannte Substrat (30) aus monokristallinem Silizium besteht.

6. Gassensor nach Anspruch 1, **dadurch gekennzeichnet, dass** außerdem eine dielektrische Schicht (32) zwischen dem genannten Substrat (30) und dem genannten Heizkörper (24) aufgebracht wird.

7. Gassensor nach Anspruch 1, **dadurch gekennzeichnet, dass** der genannte Heizkörper (24) aus polykristallinem Silizium besteht, welches durch Dotieren elektrisch leitend gemacht wurde.

8. Gassensor nach Anspruch 1, **dadurch gekennzeichnet, dass** die genannte Isolationsschicht (26) aus Siliziumoxid (SiO2) oder aus Siliziumnitrid (Si3N4) besteht.

9. Gassensor nach Anspruch 1, **dadurch gekennzeichnet, dass** er zusätzlich zu der genannten lsolationsschicht (26) und den genannten Leiterbahnen (22) eine Passivationsschicht (34) enthält, welche mit einer zentralen Öffnung (35) versehen ist, um die genannte obere Metalloxidschicht (20b) aufzubringen.

10. Gassensor nach Anspruch 9, **dadurch gekennzeichnet, dass** die genannte Passivationsschicht (34) aus einer Doppelschicht aus Siliziumoxid (SiO2) und Silizumnitrid (Si3N4) besteht.

11. Gassensor nach Anspruch 1, **dadurch gekennzeichnet, dass** die Dicke der genannten oberen Metalloxidschicht in der Größenordnung von 1 Mikrometer liegt.

12. Gassensor nach Anspruch 2, **dadurch gekennzeichnet, dass** die Dicke der genannten unteren Metalloxidschicht zwischen 50 und 300 Nanometer beträgt.

13. Gassensor nach Anspruch 1, **dadurch gekennzeichnet, dass** er außerdem aus einem Träger (10) besteht, auf welchem das genannte Substrat (30) befestigt ist.

14. Gassensor nach Anspruch 1, **dadurch gekennzeichnet, dass** er ein Schutzgehäuse (16) besitzt, welches aus einem Material gefertigt ist, das eine Filterfunktion ausübt.

15. Verfahren zur Herstellung eines chemischen Metalloxid-Gassensors, bestehend aus den aufeinanderfolgenden Schritten:
- Bildung einer elektrisch leitenden Schicht auf einem Teil des genannten Substrats (30) zur Bildung des genannten Heizkörpers (24),
- Bildung einer lsolationsschicht (26) auf der genannten leitenden Schicht und auf dem unbedeckten Teil des genannten Substrats ,
- Bildung von Leiterbahnen (22) auf der genannten lsolationsschicht (26) und
- Bildung eines Sensorelements aus Metalloxid (20), wobei in diesem Schritt die obere Metalloxidschicht (20b) auf einem Teil der Isolationsschicht (26) und auf den Enden der Leiterbahnen (22) gebildet wird, und welche aus einem agglomerierten Pulver mit poröser Struktur und sphärischen Partikeln mit einem Durchmesser in der Größenordnung von 20 Nanometer besteht, wobei die Bildung der genannten oberen Metalloxidschicht (20b) ein Auftropfen einer kolloidalen Lösung des genannten Metalles beinhaltet, gefolgt von einem Aufheizen des Gebildes um die Partikel, welche die genannte kolloidale Lösung bilden, zu oxidiern und untereinander zu festigen.

16. Verfahren zur Herstellung nach Anspruch 15, **dadurch gekennzeichnet, dass** außerdem bei der Bildung des Sensorelements aus Metalloxid (20) vor der Bitdung der Leiterbahnen eine untere Metalloxidschicht (20a) aus dem genannten Metall durch Kathodenabscheidung auf einem Teil der Isolationsschicht (26) aufgebracht und oxidiert wird.

17. Verfahren zur Herstellung nach den Ansprüchen 15 bis 16, **dadurch gekennzeichnet, dass** das genannte Metall Zinn ist.

18. Verfahren zur Herstellung nach Anspruch 15, **dadurch gekennzeichnet, dass** das genannte Aufheizen mit dem Heizkörper (24) erzeugt wird.

19. Verfahren zur Herstellung nach Anspruch 15, **dadurch gekennzeichnet, dass** außerdem vor der Bildung der genannten elektrisch leitenden Schicht eine dielektrische Schicht (32) auf dem genannten Substrat (30) gebildet wird.

20. Verfahren zur Herstellung nach Anspruch 15, **dadurch gekennzeichnet, dass** außerdem vor der Bildung der genannten oberen Metalloxidschicht (20b) eine Passivationsschicht (34) auf der genannten Isolationsschicht (26) und auf den genannten Leiterbahnen (22) gebildet wird, welche mit einer zentralen Öffnung (35) versehen ist um die genannte obere Metalloxidschicht aufzubringen.

21. Verfahren zur Herstellung nach Anspruch 20, **dadurch gekennzeichnet, dass** außerdem nach der Bildung der genannten Passivationsschicht (34) und vor der Bildung der genannten oberen Metalloxidschicht (20b) ein Befestigen des genannten Substrates auf dem genannten Träger (10) und eine Verbindung der Leiterbahnen (22) mit den Kontakten (12) des Trägers vorgenommen wird.

## Claims

1. Chemical, metal oxide gas sensor composed of:
• A substrate (30),
• A heater corps (24) placed on said substrate,
• A insulating electric layer (26) placed on said heater corps,
• A metal oxide sensitive layer (20) placed on said insulating electric layer, and
• Two conducting leads (22) which permit the application of an electric signal to the said sensing element,
**characterized by** the fact that the conducting leads (22) rest on the insulating layer (26) and the fact that said sensitive element (20) is composed of an upper layer of metal oxide (20b) in the form of a porous-structure agglomerated powder made up of spherical particles with a diameter of around 20 nanometers and covering (at least partially) the ends of the referenced conducting leads.

2. Sensor referenced in claim 1, **characterized by** the fact that said sensing element (20) also includes a sub-layer of the same metal oxide (20a) consisting of grains of an average dimension of at least 100 nanometers, interposed between the insulating layer (26) and the upper layer of metal oxide (20b). The ends of the referenced conducting leads rest between the sub-layer and the upper layer.

3. Sensor referenced in claim 2, **characterized by** the fact that the average dimension of the grains that make up the sub-layer (20a) is not larger than 1 micrometer.

4. Sensor referenced in claim 1, **characterized by** the fact that the metal oxide forming the sensitive element is tin.

5. Sensor referenced in claim 1, **characterized by** the fact that said substrate (30) is composed of mono-crystalline silicon.

6. Sensor referenced in claim 1, **characterized by** the fact that it includes, among others, a dielectric layer (32) interposed between said substrate (30) and said heater corps (24).

7. Sensor referenced in claim 1, **characterized by** the fact that said heater corps (24) is composed of poly-crystalline silicon rendered conductive by doping.

8. Sensor referenced in claim 1, **characterized by** the fact that said insulating electric layer (26) is composed of silicon oxide (SiO2) or silicon nitride (Si3N4).

9. Sensor referenced in claim 1, **characterized by** the fact that it includes, a passivation layer (34) equipped with a central opening (35) designed to hold the upper metal oxide layer (20b). Said passivation layer (34) is placed on top of said insulating layer (26) and said conducting leads (22).

10. Sensor referenced in claim 9, **characterized by** the fact that said passivation layer (34) is composed of a double layer of silicon oxide (SiO2) and silicon nitride (Si3N4).

11. Sensor referenced in claim 1, **characterized by** the fact that the upper metal oxide layer has a thickness on the order of 1 micrometer.

12. Sensor referenced in claim 2, **characterized by** the fact that the metal oxide sub-layer has a thickness of between 50 and 300 nanometers.

13. Sensor referenced in claim 1, **characterized by** the fact that it includes a base (10) upon which said substrate (30) is fixed.

14. Sensor referenced in claim 1, **characterized by** the fact that it includes a protective cover (16) made of a material acting as a filter.

15. Fabrication process of a chemical, metal oxide gas sensor, **characterized by** the fact that said process includes the following successive steps:
• Formation, on one part of a substrate (30), of a conductive layer which will constitute a heater corps (24),
• Formation of an insulating electric layer (26) on top of said conductive layer and the part of the substrate not covered by said conductive layer,
• Formation of conducting leads (22) on top of said insulating layer, followed by
• Formation of a sensitive metal oxide element (20). This step consists of the creation, on one part of the insulating layer (26) and the ends of said leads (22), of a upper metal oxide layer (20b) in the form of a porous-structure agglomerated powder made up of spherical particles with a diameter of around 20 nanometers. The creation of this upper layer (20b) includes the deposition of a drop of a colloidal solution of said metal, followed by the heating of the entire apparatus in order to oxidize and solidify the particles within the colloid of said solution.

16. Process referenced in claim 15, **characterized by** the fact that the formation of the sensitive metal oxide layer (20) includes, among others, before the formation of the conducting leads, the deposition by cathodic sputtering, on top of one part of the insulating layer (26), of a sub-layer (20a) of said metal, followed by its oxidation.

17. Process referenced in claims 15 and 16, **characterized by** the fact that said metal is tin.

18. Process referenced in claim 15, **characterized by** the fact that said heating operation is performed by using the heater corps (24).

19. Process referenced in claim 15, **characterized by** the fact that it includes before the formation of said conductive layer, the formation, on top of the substrate (30) of a dielectric layer (32).

20. Process referenced in claim 15, **characterized by** the fact that it includes, among others, before the creation of the upper metal oxide layer (20b), the formation, on top of said insulating layer (26) and said conducting leads (22), of a passivation layer (34) equipped with a central opening (35) designed to hold said upper metal oxide layer.

21. Process referenced in claim 20, **characterized by** the fact that it includes after the formation of said passivation layer (34) and before the creation of the upper metal oxide layer (20b), the attachment of said substrate to the base (10) and the connection of the conducting leads (22) to the pins (12) on the base.
